Europäisches Patentamt

(19) European Patent Office

Office européen des brevets

(11) Publication number: **0 232 307**
**B1**

(12) **EUROPEAN PATENT SPECIFICATION**

(45) Date of publication of patent specification: **24.10.90**

(51) Int. Cl.⁵: **G 01 S 13/80, B 64 D 25/20, G 01 S 13/76**

(21) Application number: **86904327.3**

(22) Date of filing: **24.07.86**

(86) International application number:
**PCT/GB86/00444**

(87) International publication number:
**WO 87/00931 12.02.87 Gazette 87/04**

(54) POSITION INDICATOR BEACON AND DEPLOYMENT MEANS.

(30) Priority: **29.07.85 GB 8519100**

(43) Date of publication of application:
**19.08.87 Bulletin 87/34**

(45) Publication of the grant of the patent:
**24.10.90 Bulletin 90/43**

(84) Designated Contracting States:
**BE DE FR GB IT NL SE**

(56) References cited:
**FR-A-1 203 021**
**FR-A-1 253 135**
**US-A-3 344 420**
**US-A-4 186 396**

**Patent Abstracts of Japan, volume 2, no. 33, 6th March 1978 & JP-A-52155908**

**Patent Abstracts of Japan, volume 5, no. 32 (P-50) (704), 27th February 1981 & JP-A-55154482**

(73) Proprietor: **CALEDONIAN AIRBORNE SYSTEMS LTD.**
**33 Wellheads Crescent Aberdeen Airport Dyce, Aberdeen (GB)**

(72) Inventor: **SAMARAI, Faris**
**33 Wellheads Crescent, Wellheads Industrial Estate**
**Dyce Aberdeen (GB)**

(74) Representative: **Warren, Francis Charles et al Baron & Warren 18 South End Kensington London W8 5BU (GB)**

Courier Press, Leamington Spa, England.

**Description**

This invention relates to a position indicator beacon for use, for example, as a crash position indicator for aircraft, helicopters or sea vessels.

It is known from FR-A-1 253 135 to provide a crash position indicator comprising a VHF/UHF radio transmitter disposed in a buoyant container and adapted to be mounted on an aircraft or vessel for automatic or semi-automatic activation and release in emergency on to the sea whereby the position of the emergency or crash is indicated by VHF/UHF radio signal transmission.

In use such devices have proved generally satisfactory and are widely used as safety devices in fixed wing aircraft whereby in emergency the device is released for free fall but are not suitable in some applications, for example in helicopters where, in an emergency the collective is lowered to cause rapid descending of the helicopter hence airflow upwardly through the rotor blades. This is liable to draw the released device upwardly into these blades and cause destruction of the device and/or helicopter.

Furthermore, VHF/UHF radio signals are not always detectable by rescue services for reasons of interference.

It is known from US-A-4 186 396 to provide a radar beacon comprising a radar transponder having a slot antenna for transmitting and a slot antenna for receiving which are respectively disposed in substantially the same axial direction, and a transmitting unit and a receiving unit which are respectively connected to each end, and in the axial direction of the slot antenna. The assembly is contained within a generally cylindrical radar dome of radar permeable material and suitably includes a dedicated battery for operation of the transmitter and receiver. The receiver is adapted on receipt of a radar signal, for example from a searching aircraft, to set the transmitter into operation. The transmitter generates a modulated radar signal such that the transmitted signal may be received by the search radar as a spaced series of blips on the radar screen representative of the bearing and distance of the beacon from the search radar. Such beacons have been used on ships and on life rafts.

It is an object to provide an improved position indicator device.

Accordingly, the invention provides a position indicator beacon particularly for indicating a position at sea comprising a buoyant container incorporating a VHF/UHF radio transmitter switchably connected to a power source within the container and connected to a transmitting antenna, in combination with a radar transponder also switchably connected to the power source and adapted on the impingement of radar signals to generate and transmit an enhanced radar signal response, the transponder being disposed in an upper watertight part of the container, said upper part being pervious to VHF/UHF radio and radar signals.

Suitably the antenna comprises a quarter wave whip antenna mounted above the upper watertight part of the container.

The upper watertight part of the container is suitably mounted on a part of the container containing the power source in the form of a battery and forming a buoyancy compartment, the battery serving as ballast to maintain the upper part in a generally upright position when floating on water.

The power source is suitably coupled to the transmitter through means automatically operable on release or ejection of the device in an emergency for example an inertia switch, frangible means, time switch, shock sensitive means, or liquid sensitive means such as a float switch or a combination of these.

In one embodiment the transmitter is activated by means of a hydrostatic switch when the beacon is floating in water and obtaining an upright position within 40° of vertical for at least 8 seconds. The unit is then latched on so that the VHF/UHF transmitter is in a transmitting condition and the radar transponder activated to respond to receipt of radar signals.

The transmitter is suitably adapted to transmit a signal representative of the position of the aircraft at the time of the emergency or ejection of the device and to this end means are provided within the container which are adapted to record or store data representing the aircraft position which are arranged for connection to the aircraft present position indicator such that on ejection of the device the then position of the aircraft is stored. Means are provided to drive the transmitter to transmit a signal representative of the stored position such that, for example, remote receipt of the signal via satellite communication would allow for the location of the emergency to be decoded from the signal.

The recording means are suitably also arranged as a digital data recorder to store data in the manner of an aircraft black box such that critical flight parameters normally monitored for black box recorder purposes will be recorded and stored in the recording means such that on location of a deployed beacon, the recording means may be retrieved and the flight data analysed.

Means for releasably mounting the beacon on an aircraft, helicopter or other vehicle or vessel suitably comprise projector means adapted to eject the device at such velocity and in such direction as to clear any impediment. Mechanisms of this general type are known for example from FR-A-1 203 021 and 1 253 135.

In a particular embodiment of the invention developed particularly for use with helicopters the container of the device at an end of the buoyancy chamber opposite the cylindrical casing, and coaxial therewith, is provided with a cylindrical support open at its end remote from the container. The cylindrical support is slidably engaged within a cylindrical mount of a mounting member adapted to be secured to the helicopter. The support and mount are secured by a transverse shear pin and compression spring ejector means are arranged between the mounting member and the device such that on shearing of the pin the spring ejector means operate to project the container axially in relation to the cylindrical mount and support. Latch means are provided between the support and mounting cylinder and are adapted to release on shearing of the pin and arranged to take the spring force off the shear pin. A fuse or flare device is contained within the cylindrical mount and is arranged for remote ignition either by manual operation of a switch within the aircraft or by automatic means, for example, an inertia switch, frangible or other shock sensitive means, liquid sensitive means or the like or a combination of such means. The arrangement is such that, on ignition, gas generation within the cylindrical support and mount effects axial pressure thrust between the support and the mount to shear the pin and allow projection of the device. The latch means suitably comprise ball latch means arranged to act between recesses within the mount and apertures in the support, the arrangement being such that on shearing of the pin the impingement of the edges of the apertures against the balls causes the balls to move inwardly of the cylindrical support through apertures. The ball latches serve to take the spring compression force from the shear pin.

The invention will now be described, by way of example, with reference to the accompanying partly diagrammatic drawings, in which:-

Figure 1 is a side elevation to reduced scale of a buoyant position indicator beacon in upright position and removed from mounting means,

Figure 2 is a partly sectional elevation of mounting means for the device of Figure 1 to a larger scale and showing a supported portion of the device of Figure 1,

Figure 3 is a schematic view of the VHF/UHF radar transponder assembly of the beacon of Figure 1,

Figure 4 is a side elevation of a further embodiment of beacon, and

Figure 5 is a schematic view of a further arrangement of the transmitter and transponder in association with data recording means for use within a beacon.

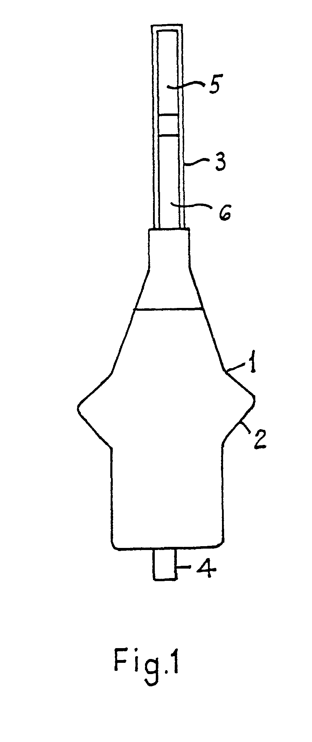

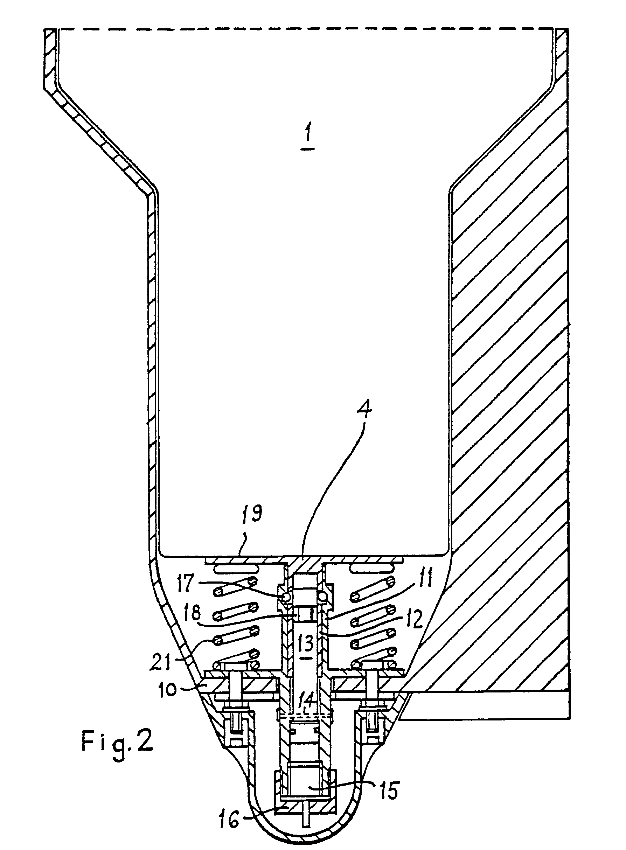

The beacon of Figure 1 comprises a watertight container 1 constituting a lower buoyancy compartment 2 and supporting at its upper end an upright cylindrical watertight casing 3. A spigot 4 projects downwardly from a central lower portion of the container to serve as a support member for releasably mounting the beacon in mounting means as shown in Figure 2. The cylindrical casing 3 is formed of material pervious to high frequency radiation in the VHF/UHF and radar range and contains an upper transmitting antenna 5 and a lower radar transponder 6.

The container 1 and casing 3 are suitably formed at least in parts exposed when the beacon is floating of fluorescent orange (Federal Standard 595a) fire-resistant heavy gauge polyethylene to define an environmentally sealed container. The lower portion of the container 1 may be contained within a brass cap formed with the spigot 4.

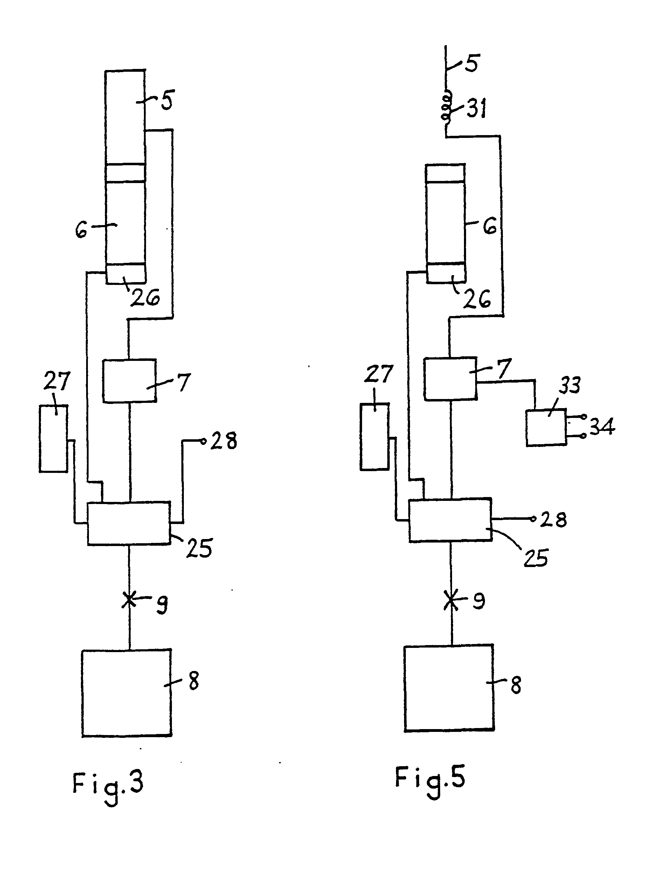

As shown in Figure 3 the antenna 5 is coupled to a high frequency transmitter 7, suitably mounted within the container 1, arranged to be energised by a battery 8 through switch means 9. The battery 8 is suitably mounted in a lower part of the container 1 to act as ballast and ensure upright floating of the beacon on water. The switch means 9 is suitably arranged automatically to close and energise the transmitter 7 on discharge of the beacon in emergency and may comprise a time switch, shock sensitive means, liquid sensitive means such as a float switch, frangible means, or a combination of these. Suitably a hydrostatic switch is employed as the switch means 9 operable when the lower portion of the container 1 is immersed with the beacon floating in an upright position within 40° of vertical after a predetermined minimum period of 8 seconds. The beacon is adapted to float with the cylindrical casing 3 above water level and the hydrostatic switch 9 exposed to water through a sealed aperture in the container 2.

A suitable VHF/UHF antenna is BURNDEPT Model 522 adapted to operate in the international distress frequencies of 121.5 and 243 MHz, a suitable screened VHF/UHF transmitter is BURNDEPT 121.5, 243 Model 522 operating with carrier frequencies of 121.5 and 243 MHz and a suitable radar transponder is an X-BAND MITSUBISHI MELSART Model H.9.5 GHz operating at 9.3 to 9.5 GHz.

The VHF/UHF transmitter BURNDEPT 121.5, 243 Model 522 operating with BURNDEPT VHF/UHF antenna Model 522 or with a $\frac{1}{4}$ wave whip antenna mounted externally of the container transmitting a radio distress signal has been found to be detectable by airborne receivers of appropriate specification up to a distance of 80 nautical miles.

The VHF/UHF transmitter is suitably provided with test load circuitry connectable through contacts exposed externally of the container and powered by the beacon's own battery whereby testing of the efficacy of the transmitter may be effected before operation of the aircraft, helicopter or other vehicle or vessel. The test circuitry is also applied to the transponder 6 for like purposes. The external contacts are suitably arranged to engage complementary contacts on a support or mounting means for the beacon and from which the beacon is arranged to be deployed. The complementary contacts are suitably connected to test circuitry on the aircraft, helicopter or other vehicle or vessel incorporating test switches and an illuminated display whereby operation of individual switches allows testing of the functional components within the beacon and appropriate illumination of the display to indicate satisfactory or unsatisfactory conditions.

The radar transmitter of the transponder 6 is operatively coupled to a sawtooth generator adapted when the transponder 6 is receiving a radar signal, for example, a signal from the weather radar of a search aircraft, to cause the transmitter of the transponder 6 to generate a series of enhanced radar signals in the 9.3 to 9.5 GHz band, this band range being compatible with all commercially available aircraft and marine radars. In an embodiment the sawtooth generator is adapted to generate an operating frequency of 20 repetitions in 100 microseconds at a sweep frequency sawtooth spacing of 5 microseconds nominal, the enhanced radar signals showing an antenna gain of 3dB. As a result, when the beacon is in the line of sight-range it will recognise interrogation of the weather radar of the searching aircraft and reply or echo with a unique response pattern signal of 20 equally spaced pulses which will be represented on a radar display as 20 equally spaced blips extending outwardly from the beacon in 0.4 nautical mile increments. The display signal is readily distinguishable from other normal radar echoes and against heavy sea clutters and enables the location of the beacon to be pin-pointed from ranges of 39 nautical miles on radar.

As a result a search aircraft may initially home on the radio signal and on detection of the coded radar coded signal can precisely pin-point the beacon position.

Referring now to Figure 2 the beacon of Figure 1 is suitably deployably mounted on mounting means 10 secured to an aircraft, helicopter, vessel or other vehicle. The mounting means 10 comprises a cylindrical mounting member 11 slidably receiving a cylindrical extension sleeve 12 of the spigot 4 of the beacon. The sleeve 12 is open at its lower end and slidably receives a plunger 13 secured at its lower end to the member 11 by a transverse shear pin 14. Within the member 11, below the plunger 13 there is mounted a fuse or flare device 15 arranged and adapted for remote and/or automatic ignition. The lower end of member 11 is closed by a cap 16.

The sleeve 12 and member 11 are latched together in releasable manner by balls 17 seated within recesses in the member 11 and engaging apertures in the sleeve 12. The balls 17 are retained in this position by a head of the plunger 13 which is formed below the balls with an annular recess 18, such that on upward movement of the plunger 13 to an uppermost position within the sleeve 12, the balls are released from their seating to disengage the latch.

At its upper end the sleeve 12 is formed externally with a flange 19 opposed to a similar lower flange 20 extending outwardly from the member 11, the flanges 19, 20 forming pressure plates between which are confined compression springs 21 in compressed condition arranged to urge the pressure plates 19, 20 apart.

In operation, on ignition of the fuse or flare device 15, combustion gases generate pressure within the member 11 acting against the lower end of the plunger 13 to develop shear stress on the pin 14 until the pin shears, allowing the plunger to rise to register the recess 18 with the balls 17 which fall or are driven inwardly to release the latch between the sleeve 12 and member 11. The compression springs 21 are now free to expand and project the sleeve 11 from the member 12 and thereby project the beacon from the mounting means 10 and away from the aircraft, helicopter or whatever on which it is mounted.

Ignition of the flare device 15 is suitably by electrically operated ignition means under switched control from a dedicated battery in the helicopter, aircraft or other vehicle or vessel. Switch means for operation of the ignition suitably comprises a frangible switch, a hydrostatic switch, an inertia switch, whereby in an emergency the ignition device may be operated for example by the pilot manually, or automatically in response to immersion, impact or sensed unsafe rotation of the rotor.

The mounting member is suitably adapted to guide the beacon on projection in a predetermined path and is arranged in use on an aircraft, helicopter whatever to clear obstructions which may be presented. In this respect consideration of the operating conditions of the aircraft, helicopter or other vehicle or vessel needs to be taken into account. For example in helicopter application it is particularly important to take into account the need to clear the updraft caused when reversal of airflow takes place on descent as would be common in an emergency, and the compression spring must be such as to provide adequate projection forces.

Generally with a helicopter the beacon in its mounting member is preferably mounted on the fuselage side or tail boom with the beacon deployed aft and downwardly.

Referring now to the schematic arrangement of Figure 3 showing the operational arrangement of the functional parts of the assembly within the watertight container 1 of the beacon of Figure 1, the battery 8 is connected through the hydrostatic switch 9, which is exposed through a sealed aperture in the container 1 below the waterline, to a power management circuit 25 arranged to supply power to the operating circuitry 26 of the transponder 6 and to the transmitter 7 which is connected to the upper transmitting antenna 5. The power management circuitry 25 contains dummy loads for the transmitter 7 and transponder 6 and is connected to a test panel 27 having switch means accessible from outside the container 1 of the beacon and adapted to switch in the dummy loads for test purposes to illuminate LED's on the panel to indicate satisfactory condition. The power management circuitry 25 is connected to a contact set 28, exposed externally of the container 1 for external connection to a source of power for the test purposes. The switch means and on the test panel 27 is suitably arranged in association with the power management circuitry to reset the power management circuitry to cut off power to the transponder 6 and transmitter 7 when the beacon has been displayed and after the beacon has been removed from water.

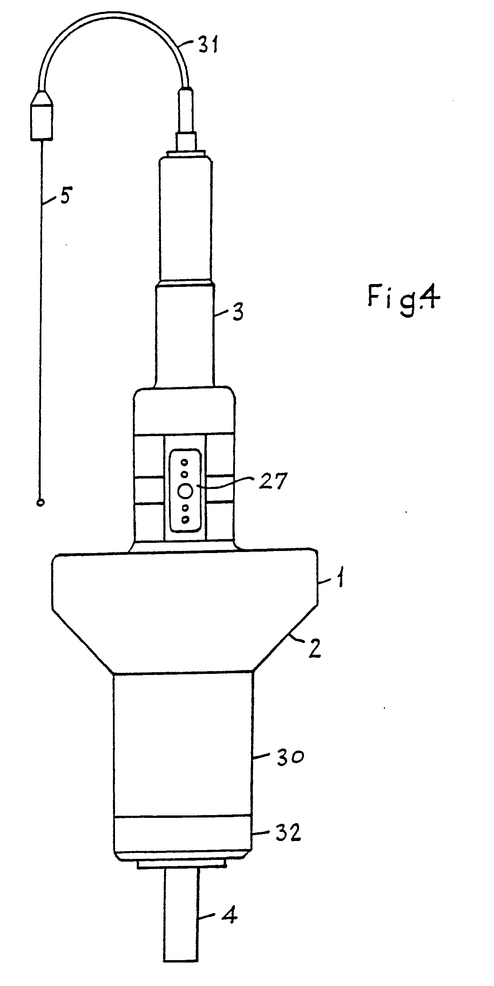

In the modified embodiment of Figure 4 in which like reference numerals to those of corresponding parts of Figures 1 and 3 being used, a beacon comprises a container 1 having a buoyant section 2 with a lower cylindrical extension 30 defining a compartment for a battery for operating a radio transmitter and radar transponder generally as described in connection with Figures 1 and 3. The radar transponder is disposed within an upper cylindrical casing 3 arranged to extend above water level when the beacon is floating. A $\frac{1}{4}$ wavelength whip antenna 5 for the radio transmitter is mounted on the upper end of the upper casing 3 and has a resilient section 31 whereby the antenna 5 may be bent back beside the upper extension 3, as shown, for stowage within the beacon mounting means 10, Figure 2, prior to deployment, and such that on deployment the antenna 5 springs to an upright condition in relation to the beacon container 1. The lower cylindrical extension 30 is secured within a lower brass cap 32 formed centrally with the downwardly extending spigot 4, for securement in the mounting member 11 of the mounting means 10 of Figure 2.

As shown in Figure 5 the transponder 6 and radio transmitter 7 contained within container 1, of Figure 4, are connected to the battery power source 8 via power management circuitry 25 and a hydrostatic switch 9 operable through the container by exposure to water when the beacon is floating upright within 40° from vertical generally as described in connection with Figure 3. Also contained within the container 1 is a digital data recorder 33 connected to contacts 34 exposed externally of the container 1 and arranged to contact complementary contacts on the beacon support 10 which are adapted for operative connection to a present position indicator of an aircraft, helicopter or other vehicle or vessel such that present position data may be recorded and also other flight or passage data relevant to safe flight or passage prior to deployment of the beacon. The recorder 33 is suitably coupled to the radio transmitter 7 so that the carrier signals may be modulated to give a latest present position signal at the time the beacon is activated by the hydrostatic switch after deployment.

Flight data recording may be stored in digital form to be retrieved by down loading to a ground based computer.

**Claims**

1. A position indicator beacon particularly for indicating a position at sea comprising a buoyant container (1) incorporating a VHF/UHF radio transmitter (7) switchably connected to a power source (8) within the container (1) and connected to a transmitting antenna (5), in combination with a radar transponder (6) also switchably connected to the power source and adapted on the impingement of radar signals to generate and transmit an enhanced radar signal response, the transponder (6) being disposed in an upper watertight part (3) of the container (1) said upper part being pervious to VHF/UHF radio and radar signals.

2. A beacon as claimed in claim 1, in which the antenna (5) is disposed above the transponder (6) in said upper watertight part (3) of the container (1).

3. A beacon as claimed in claim 1, in which the antenna (5) is a whip antenna mounted externally of the container (1) at the upper end of the upper watertight part (3) and adapted for stowage in a bent back position beside the container and on deployment to spring to an upright extended position.

4. A beacon as claimed in any preceding claim in which the power source (8) is coupled to the transmitter (7) and transponder (6) through common switch means (9) automatically operable on deployment of the beacon in an emergency and in which the switch means is a hydrostatic switch arranged for exposure to water below a waterline of the beacon when deployed on water.

5. A beacon as claimed in any preceding claim in which the transmitter (7) is adapted to transmit a signal representative of its position at the time of deployment of the beacon and means (33) are provided within the container (1) which are adapted to record and store data representing the present position of an aircraft, helicopter, or sea vessel on which the beacon is deployably mounted and contact means (34) exposed externally of the container (1) and adapted for operative connection to a present position indicator on said aircraft, helicopter or sea vessel for input of such data to said recording and storage means such that on deployment of the beacon the position at that time is stored, and means are provided to drive the transmitter (7) to transmit a signal representative of the stored position such that remote receipt of said signal enables the location of the beacon to be decoded from the signal.

6. A beacon as claimed in any preceding claim, including means (4, 10) for releasably mounting the beacon on an aircraft, helicopter or sea vessel and projector means (15, 21) adapted to eject the device at such velocity and in such direction as to clear an impediment, and further including a cylindrical support (4, 12) of the beacon open at its end remote from the container (1), the cylindrical support (12) slidably engaging within a cylindrical mount (11) of a mounting member (10) adapted for mounting to said aircraft, helicopter or sea vessel, the support (12) and mount (11) being secured by a transverse shear pin (14) and compression spring ejector means (21) arranged between the mounting member (10) and the device (1) such that on shearing of the pin (14) the spring ejector means (21) operate to project the cylindrical support (4, 12) axially in relation to the cylindrical mount (11).

7. A beacon as claimed in claim 6, in which latch means (17) are provided between the support (12) and the mounting cylinder (11) and are adapted to release on shearing of the pin (14), and a squib device (15) contained within the cylindrical mount (11) and arranged for remote ignition, the arrangement being such that on ignition, gas generation within the cylindrical support (12) and mount (11) effects axial pressure thrust between the support (12) and the mount (11) to shear the pin (14) and allow ejection of the support (12).

8. A beacon as claimed in claim 7, in which the latch means comprises ball latch means (17) arranged to act between recesses within the mount (11) and apertures in the support (12), the arrangement being such that on shearing of the pin (14) the impingement of the edges of the apertures against the balls (17) causes said balls to move inwardly of the cylindrical support (12) through the apertures, the ball latches (17) serving to take the spring (21) compression force from the shear pin (14).

**Patentansprüche**

1. Bake für die Positionsanzeige, insbesondere zur Anzeige einer Position auf See, bestehend aus einem Auftriebsbehälter (1) mit einem VHF/UHF-Radiosender (7), der schaltbar mit einer Energiequelle (8) innerhalb des Behälters (1) verbunden und an einer Sende-antenne (5) angeschlossen ist, in Kombination mit einem Radartransponder (6), der ebenfalls schaltbar mit der Energiequelle verbunden und an das Auftreffen von Radarsignalen angepaßt ist, um ein verstärktes Radar-Antwortsignal zu erzeugen und zu senden, wobei der Transponder (6) in einem oberen wasserdichten Teil (3) des Behälters (1) angeordnet und der obere Teil für VHF/UHF-Radio- und Radarsignale durchlässig ist.

2. Bake nach Anspruch 1, bei der die Antenne oberhalb des Transponders (6) in dem oberen wasserdichten Teil (3) des Behälters (1) angeordnet ist.

3. Bake nach Anspruch 1, bei der die Antenne (5) eine Peitschenantenne ist, die außerhalb des Behälters (1) an dem oberen Ende des oberen wasserdichten Teils (3) angebracht ist, die zu Verstauzwecken in einer abgeknickten Position neben dem Behälter (1) ruht und beim Entfalten in eine aufrechte gestreckte Lage schwenkt.

4. Bake nach einem der vorhergehenden Ansprüche, bei der die Energiequelle (8) über einen an sich bekannten Schalter (9) mit dem Sender (7) und dem Transponder (6) verbunden ist, der beim Entfalten der Bake in einem Notfall automatisch schaltbar ist, und bei der der Schalter ein hydrostatischer Schalter ist, wobei die Anordnung vorsieht, daß der Schalter Wasser unterhalb einer Wasserlinie der Bake ausgesetzt ist, wenn diese auf dem Wasser entfaltet ist.

5. Bake nach einem der vorhergehenden Ansprüche, bei der der Sender (7) dazu ausgelegt ist, ein seine position zum Zeitpunkt des Entfaltens der Bake repräsentierendes Signal zu senden, bei der Mittel (33) innerhalb des Behälters (1) vorgesehen sind, die Daten aufnehmen und speichern können, welche die momentane Position eines Flugzeuges, Helikopters oder eines Schiffes, an welchem die Bake entfaltbar angebracht ist, repräsentieren, bei der Mittel (34) außerhalb des Behälters (1) angebracht sind, die für eine operative Verbindung zu einem Momentanpositionsgeber auf dem Flugzeug, Helikopter oder Schiff ausgelegt sind, um diese Daten zu den genannten Aufnahme- und Speichermitteln weiterzuleiten, so daß bei Entfaltung der Bake die Position zu diesem Zeitpunkt gespeichert ist, und bei der Mittel vorgesehen sind, die den Sender (7) ansteuern, um ein die gespeicherte Position repräsentierendes Signal zu senden, so daß der Fernempfang dieses Signals die Ortung der Bake ermöglicht, wobei das Signal decodiert werden muß.

6. Bake nach einem der vorhergehenden Ansprüche mit Mitteln (4, 10) zur lösbaren Befestigung der Bake an einem Flugzeug, Helikopter oder Schiff und mit einem Mechanismus (15, 21) zum Auswerfen des Gerätes mit einer solchen Geschwindigkeit und in eine solche Richtung, um einem Hindernis auszuweichen, und weiterhin mit einem zylindrischen Halter (4, 12) der Bake, der an dem Behälter (1) abgewandten Ende offen ist, wobei der zylindrische Halter (12) gleitend innerhalb einer zylindrischen Fassung (11) eines Gehäuses (10) gelagert ist, welches für die Montage an das Flugzeug, den Helikopter oder das Schiff vorgesehen ist, wobei der Halter (12) und die Fassung (11) durch einen Querscherbolzen (14) und ein Druckfederauswurfmittel (21) zwischen dem Gehäuse (10) und dem Gerät (1) gesichert sind, so daß beim Scheren des Bolzens (14) das Federauswurfmittel (21) wirkt, um den zylindrischen Halter (4, 12) axial in bezug auf diese zylindrische Fassung (11) auszuwerfen.

7. Bake nach Anspruch 6, bei der Schnappmittel (17) zwischen dem Halter (12) und der Fassung (11) vorgesehen sind, die beim Scheren des Bolzens (14) ausrücken, und bei der eine Zündladung (15) innerhalb der zylindrischen Fassung (11) enthalten ist und für eine Fernzündung vorgesehen ist, wobei die Anordnung vorsieht, daß bei der Zündung die Gaserzeugung innerhalb des zylindrischen Halters (12) und der Fassung (11) einen Axialschub zwischen dem Halter (12) und der Fassung (11) bewirkt, um den Bolzen (14) zu scheren und den Auswurf des Halters (12) zu ermöglichen.

8. Bake nach Anspruch 7, bei der die Schnappmittel aus einem Kugelschnappmittel (17) bestehen, das für ein Wirken zwischen Aussparungen innerhalb der Fassung (11) und Öffnungen in dem Halter (12) angeordnet ist, wobei die Anordnung vorsieht, daß beim Scheren des Bolzens (14) das Auftreffen der Öffnungskanten gegen die Kugel (17) diese zu einer in das Innere des zylindrischen Halters (12) gerichteten Bewegung durch die Öffnungen veranlaßt, wobei die Kugelschnappmittel (17) dazu dienen, den Druck der Feder (21) von dem Scherbolzen (14) zu nehmen.

**Revendications**

1. Balise indicatrice de position, en particulier pour indiquer une position en mer, comprenant un conteneur flottant (1), dans lequel se trouve un émetteur radio VHF/UHF (7) relié d'une manière commutable à une source d'alimentation (8) située à l'intérieur du conteneur (1) et connectée à une antenne émettrice (5), en combinaison avec un répondeur radar (6) lui aussi connecté d'une manière commutable à la source d'alimentation et adapté, après réception de signaux radar, de façon à produire et émettre en réponse un signal radar amélioré, le répondeur (6) étant disposé dans une partie supérieure (3), étanche à l'eau, du conteneur (1), ladite partie supérieure étant perméable aux signaux radio et radar VHF/UHF.

2. Balise selon la revendication 1, dans laquelle l'antenne (5) est disposée au-dessus du répondeur (6) dans ladite partie supérieure (3), étanche à l'eau, du conteneur (1).

3. Balise selon la revendication 1, dans laquelle l'antenne (5) est une antenne fouet montée à l'extérieur du conteneur (1) à l'extrémité supérieure de la partie supérieure (3) étanche à l'eau, et est disposée de façon à pouvoir être arrimée dans une position repliée vers l'arrière, sur le côté du conteneur, et, après déploiement, à sauter sur une position en extension verticale.

4. Balise selon l'une quelconque des revendications précédentes, dans laquelle la source d'alimentation (8) est couplée à l'émetteur (7) et au répondeur (6) par l'intermédiaire de moyens de commutation communs (9) pouvant fonctionner d'une manière automatique après déploiement de la balise en cas d'urgence, et dans laquelle le moyen de commutation est un commutateur hydrostatique disposé de façon à être exposé à l'eau en-dessous de la ligne de flottaison de la balise après déploiement sur l'eau.

5. Balise selon l'une quelconque des revendications précédentes, dans laquelle l'émetteur (7) est adapté de façon à émettre un signal représentatif de sa position au moment du déploiement de la balise, et, à l'intérieur du conteneur (1), sont prévus des moyens (33) qui sont adaptés de façon à enregistrer et mémoriser des données représentant la position présente d'un aéronef, d'un hélicoptère ou d'un navire sur lequel la balise est montée de façon à pouvoir être déployée, et un moyen de contact (34), exposé à l'extérieur du conteneur (1) et adapté de façon à assurer une connexion effective à un indicateur de position effective se trouvant sur ledit aéronef, hélicoptère ou navire, pour entrer desdites données dans ledit moyen d'enregistrement et de mémorisation de façon que, lors du déploiement de la balise, la position, à ce moment-là, soit mémorisée, et des moyens sont prévus pour exciter l'émetteur (7) de façon qu'il transmette un signal représentatif de la position mémorisée de façon que la téléréception dudit signal permette la localisation de la balise, qui va être décodée à partir du signal.

6. Balise selon l'une quelconque des revendications précédentes, comprenant un moyen (4, 10) pour monter d'une manière amovible la balise sur un aéronef, un hélicoptère ou un navire, et un moyen de projection (15, 21) adapté de façon à éjecter le dispositif à une vitesse et dans une direction assurant la suppression d'un obstacle, et comprenant en outre un support cylindrique (4, 12) de la balise, ouvert en son extrémité opposée au conteneur (1), le support cylindrique (12) entrant en prise, coulissante, avec une monture cylindrique (11) d'un organe de montage (10) adapté à un montage sur ledit aéronef, hélicoptère ou navire, le support (12) et la monture (11) étant fixés par un goujon transversal de cisaillement (14) et un moyen éjecteur (12) à ressort de compression disposés entre l'organe de montage (10) et le dispositif (1) de façon que, lors du cisaillement du goujon (14), le moyen éjecteur à ressort (21) fonctionne de façon à projeter le support cylindrique (4, 12) axialement par rapport à la monture cylindrique (11).

7. Balise selon la revendication 6, dans laquelle des moyens de cliquet (17) sont disposés entre le support (12) et le cylindre de montage (11) et sont adaptés de façon à se déclencher lors du cisaillement du goujon (14), et un dispositif de détonateur (15) contenu à l'intérieur de la monture cylindrique (11) et disposé pour provoquer un allumage à distance, l'arrangement étant tel que, lors de l'allumage, la production de gaz à l'intérieur du support cylindrique (12) et de la monture (11) provoque une poussée axiale de compression entre le support (12) et la monture (11) de façon à cisailler le goujon (14) et permettre l'éjection du support (12).

8. Balise selon la revendication 7, dans laquelle le moyen de cliquet comprend un moyen de cliquet à billes (17) disposé de façon à agir entre des évidements aménagés à l'intérieur de la monture (11) et des ouvertures aménagées dans le support (12), l'arrangement étant tel que, lors du cisaillement du goujon (14), le choc des bords des ouvertures contre les billes (17) provoque un déplacement desdites billes vers l'intérieur du support cylindrique (12) à travers les ouvertures, les loquets à billes (17) ayant pour but de reprendre la compression du ressort (21) provenant de la goupille de cisaillement (14).

Fig.1

Fig. 2

Fig.3

Fig.5

Fig.4